Europäisches Patentamt

**European Patent Office**

**Office européen des brevets**

(19)

(11) Publication number:

**0 135 363**
**A1**

(12)

# EUROPEAN PATENT APPLICATION

(21) Application number: **84305516.1**

(22) Date of filing: **14.08.84**

(51) Int. Cl.⁴: **F 16 H 37/02**

(30) Priority: **09.09.83 US 530548**

(43) Date of publication of application:
**27.03.85 Bulletin 85/13**

(84) Designated Contracting States:
**DE FR GB IT**

(71) Applicant: **GENERAL MOTORS CORPORATION**
**General Motors Building 3044 West Grand Boulevard**
**Detroit Michigan 48202(US)**

(72) Inventor: **Koivunen, Erkki Antero**
**15560 Westbrooke**
**Livonia Michigan 48154(US)**

(74) Representative: **Breakwell, John Neil Bower et al,**
**GM Patent Section Luton Office (F6) P.O. Box No. 3**
**Kimpton Road**
**Luton Beds. LU2 OSY(GB)**

(54) **Continuously variable power transmission.**

(57) A power transmission combines a continuously variable belt drive (56,68,70) in series relation with a multi-ratio gear arrangement (84,86;88,90) between the transmission input and output shafts. The gear arrangement can be selectively changed between low and high ratios. In each gear ratio, the belt drive ratio is controlled from an underdrive ratio to an overdrive ratio to thereby provide two continuously variable drive ranges to effect an increase in output speed. A selectively operable transition clutch (34), controlling a chain drive (114,116,118) disposed in parallel with the belt and gear drives, is provided to maintain power transmission between the input and output shafts during a ratio change in the gear arrangement as the belt drive ratio is changed from overdrive to underdrive.

Fig. 2

Croydon Printing Company Ltd.

## CONTINUOUSLY VARIABLE POWER TRANSMISSION

0135363

This invention relates to a continuously variable power transmission as specified in the preamble of claim 1, for example as disclosed in US-A-4 304 150.

The present invention is concerned with maintaining power flow in such a transmission during both belt ratio change and gear ratio changes .

To this end a continuously variable power transmission in accordance with the present invention is characterised by the features specified in the characterising portion of claim 1.

In such a transmission, therefore, the selectively operable multiple gear ratios are disposed in series drive relation with the variable ratio range belt drive, and the transition clutch is effective to maintain vehicle power transmission during a step-ratio change between gear ratios as the belt drive ratio is changed from one end to the other of the ratio range.

Preferably the transition clutch is selectively operable to control a chain drive for power transfer in parallel with the belt drive of the continuously variable transmission, whereby the belt drive ratio can be changed simultaneously with a gear ratio interchange without the interruption of power flow during the ratio change.

For this purpose the chain drive is preferably disposed in parallel drive relationship with both the belt drive and the multi-gear ratio arrangement of the continuously variable transmission, such that the belt drive ratio and the gear ratios can be changed while speed synchronization is maintained by the chain drive.

In the drawings:

Figure 1 is a fragmentary elevational view, with parts broken away and in section, of a preferred embodiment of a continuously variable power transmission in accordance with the present invention; and

Figure 2 is a somewhat simplified diagrammatic representation of the transmission shown in Figure 1.

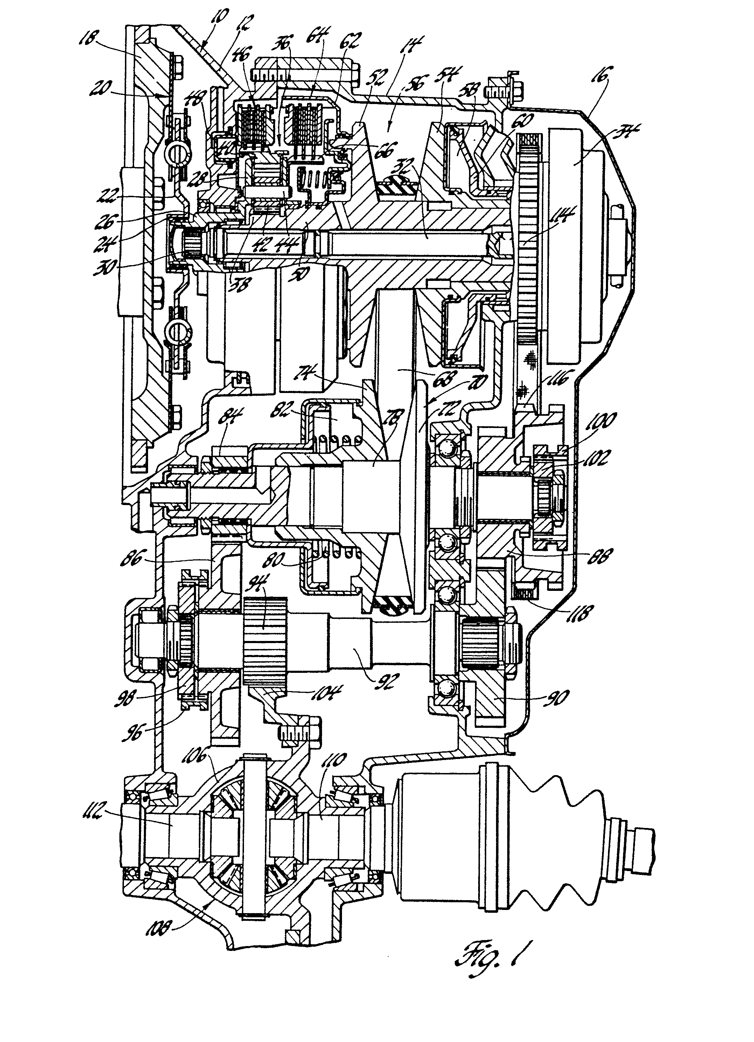

With reference now to the drawings, in which like reference characters represent like or corresponding parts in the two Figures, there is seen in Figure 1 a vehicle-mounted power transmission having a multi-piece housing 10 which includes an engine-mounted portion 12, a transmission-enclosing portion 14 and an end cover 16. The engine itself is not shown.

An engine flywheel 18 is disposed within the engine-mounted portion 12, and is adapted to be connected in well-known manner to the engine, which is an internal combustion engine. The flywheel 18 has drivingly connected thereto a vibration damper mechanism 20 which includes an inner hub 22 having a spline portion 24 formed thereon. The spline portion 24 is drivingly connected to an input sleeve shaft 26 which is formed integrally with or otherwise connected to a planet carrier 28.

The input sleeve shaft 26 also has a splined inner diameter 30 to which is drivingly connected a transition clutch input shaft 32 that in turn is drivingly connected to a conventional fluid-operated friction clutch 34 which is hereinafter designated as a transition clutch.

The planet carrier 28 is a component of a compound planetary gear set generally designated 36. The planetary gear set 36 also includes a sun gear 38, a ring gear 40 and a plurality of planetary pinions 42 rotatably mounted on pins 44 secured in the carrier 28. Certain of the pinions 42 mesh with both the sun gear 38 and the remaining pinions 42, and these remaining pinions 42 also mesh with the ring gear 40. Such compound planetary gear sets are well-known in the art: when the ring gear 40 is held stationary, the sun gear

0135363

38 will rotate in a direction opposite to that of the carrier 28, whereby a reverse-drive connection is provided when the carrier is driven.

For holding the ring gear 40 stationary, a conventional fluid-operated friction brake 46, constituting a reverse brake, is controlled in operation by a hydraulic piston 48 slidably disposed in the engine-mounted portion 12. The sun gear 38 is formed integrally with or otherwise secured to a shaft 50 which has formed thereon a pulley half (sheave) 52. A second pulley half (sheave) 54 is slidably disposed on the shaft 50, and co-operates with the pulley half 52 to form an input pulley, generally designated 56.

The pulley half 54 is controlled for sliding movement along the shaft 50 by the use of fluid pressure within a chamber 58 formed by the pulley half 54 and a wall member 60. The pulley half 52 has drivingly connected thereto a hub or drum 62 which is a member of a forward clutch 64 formed as a conventional fluid-operated friction-type clutch. The clutch 64 has an input hub 66 which is drivingly connected to the planet carrier 28, such that when the clutch 64 is engaged the pulley 56 will rotate in the same direction as the input shaft 26. Alternatively, when the brake 46 is engaged the pulley 56 will rotate in the opposite direction to the input shaft 26.

The pulley 56 is in frictional drive relationship with a belt 68 which also frictionally engages an output pulley, generally designated 70. The output pulley has a fixed pulley half (sheave) 72 and a movable pulley half (sheave) 74. The movable pulley half 74 is slidably disposed on a shaft 78 which is integral with or otherwise secured to the pulley half 72.

The pulley half 74 is urged towards the pulley half 72 by a compression spring 80 and by controlled fluid pressure which is maintained in a chamber 82. The operation of the pulleys 56 and 70 and the belt 68 is conventional, such devices being known to be applicable for providing a variable-ratio drive mechanism.

The pulleys 56 and 70, in their conditions as shown, are in an underdrive relationship. To change the ratio through a predetermined range towards an overdrive relationship, the pressure in the chamber 58 is increased such that the pulley half 54 will move towards the pulley half 52 and the belt 68 will be moved outwardly. The outward movement of the belt 68 in the pulley 56 will cause inward movement of the belt 68 in the pulley 70, this inward movement of the belt 68 being accommodated by movement of the pulley half 74.

When the belt 68 is disposed at the outermost drive diameter of the pulley 56 and the innermost diameter of the pulley 70, the maximum available overdrive relationship is established. The pulley drive ratio can be controlled within a range of ratios between the underdrive and overdrive ratio: this is accomplished by maintaining the control pressure in the chamber 58 at appropriate levels in well-known manner.

The shaft 78 has drivingly connected thereto a gear 84 which is in constant mesh with a gear 86, these gears 84 and 86 providing a low gear ratio. Rotatably mounted on the shaft 78 is a gear 88 which meshes with a gear 90, these two gears 88 and 90 providing a high gear ratio. The gear 86 is rotatably supported on a transmission output shaft 92 which has integrally formed therewith or otherwise secured thereto a gear member 94.

The gear 86 may be selectively coupled to the output shaft 92 by means of a mechanical clutch 96 which is adapted to bridge the gear 86 to a hub 98 that is drivingly connected to the output shaft 92. The

mechanical clutch 96 is a well-known structure, and will not be described in detail.  To disengage the gear 86 from the output shaft 92, the clutch 96 is moved leftwardly.

The gear 88 is connectible by means of a mechanical clutch 100 and a hub 102 to the shaft 78.  To connect the gear 88 to the output shaft 92 by way of the gear 90, the mechanical clutch 100 is moved to the left. Since the low and high gear ratios are distinct, they cannot be simultaneously connected to the output shaft 92; therefore, the mechanical clutches 96 and 100 cannot be simultaneously engaged.

The gear 94 on the output shaft 92 meshes with a ring gear 104 which is secured to a casing 106 of a conventional bevel gear differential designated 108. This differential 108 has two output shafts 110 and 112 which are adapted to be drivingly connected to the wheels of the vehicle, not shown.

The transition clutch 34 has secured thereto a sprocket member comprising a gear 114.  A second sprocket member comprising a gear 116 is formed integrally with or otherwise secured to the gear 88. The sprocket members 114 and 116 are interconnected by a conventional toothed chain 118.  Thus whenever the transition clutch 34 is engaged the input shaft 26 is connected directly to the output shaft 92 by way of the sprocket member 114, chain 118, sprocket member 116, gear 88 and gear 90.

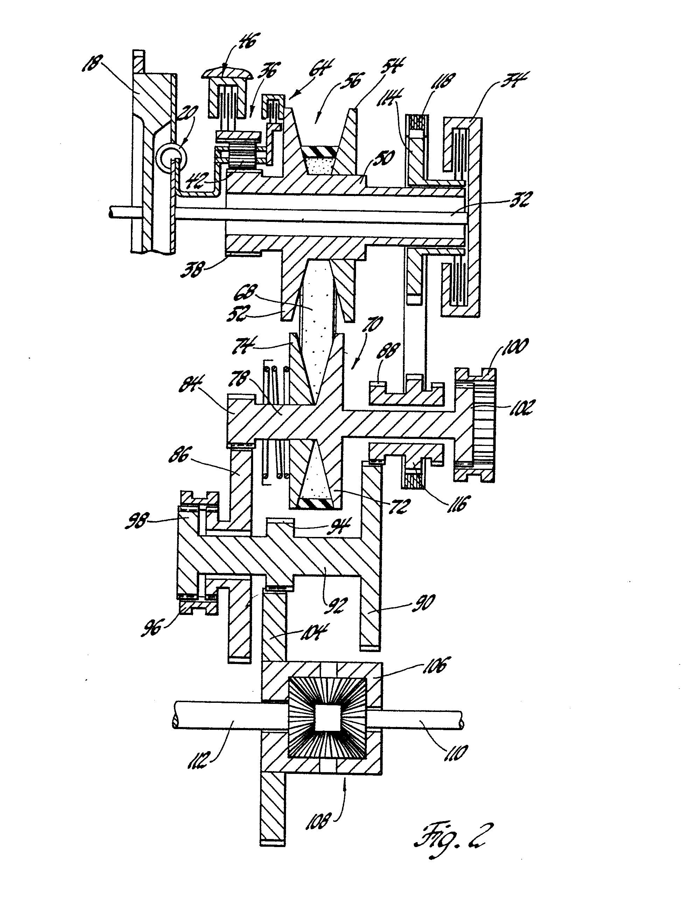

The operation of the transmission will now be described with reference to the diagrammatic representation of Figure 2.

With the vehicle at rest and the flywheel 18 being driven by the engine, the pulley 56 is controlled to establish the maximum underdrive ratio within the belt drive.  The mechanical clutch 96 is engaged to provide the low gear ratio between the belt drive and the bevel gear differential 108. The mechanical clutch 100 is disengaged, as are the friction brake 46, the forward clutch 64 and the transition clutch 34.

To start the vehicle moving in a forward direction, the forward clutch 64 is brought into control engagement. When the clutch 64 is fully engaged, the vehicle output speed can be increased by increasing the engine speed, if desired, or by changing the ratio in the belt-drive structure. Generally, the engine will be controlled to operate at its best fuel economy or performance setting, the choice depending upon the operator, and transmission output speed and therefore vehicle speed will be controlled by manipulation of the belt drive ratio.

When the belt drive is manipulated to provide the maximum overdrive ratio, there will be speed synchronization between the chain drive through the sprocket members 114 and 116, the drive through the gears 88 and 90, and the drive through the gears 84 and 86. Thus on engagement of the transition clutch 34 to control the power transmission, the output speed of the transmission will be unchanged.

When the transition clutch 34 has been engaged, the mechanical clutch 96 can be disengaged, and the ratio in the belt drive can be reduced from the maximum overdrive ratio to the maximum underdrive ratio. At the maximum underdrive ratio, there is speed synchronization between the shaft 78 and the gear 88 such that the mechanical clutch 100 can be moved leftwardly, thereby connecting the shaft 78 to the gear 88. At this time, the transition clutch 34 can be disengaged, and all the power transmission will be by way of the belt drive and the high gear ratio formed by the gears 88 and 90. With constant engine speed,

0135363

further vehicle speed increase can be obtained by controlling the belt drive ratio from the maximum underdrive to the maximum overdrive.

The overall transmission ratio may be decreased by the converse of the above-described ratio increase. Thus the belt drive ratio is decreased from maximum overdrive to maximum underdrive, at which time speed synchronization of the transition clutch 34 and the shaft 92 is attained. At this point the transition clutch 34 is engaged, the mechanical clutch 100 is disengaged, and the belt drive ratio is increased from maximum underdrive to maximum overdrive. At the maximum overdrive ratio there is speed synchronization for the engagement of the mechanical clutch 96, thereby placing the gear arrangement in the low ratio condition. After engagement of the mechanical clutch 96, the transition clutch 34 can be disengaged, and further transmission ratio decrease can be obtained by reducing the drive ratio of the belt drive from maximum overdrive to maximum underdrive.

A reverse drive is obtained by disengaging the forward clutch 64 and engaging the reverse brake 46 while the belt drive is maintained at its maximum underdrive ratio. With the preferred embodiment shown, the transition clutch 34 is not used during reverse operation, inasmuch as most vehicle operations do not require high-speed reverse.

Should high-speed reverse be desirable for a particular application, it is possible to operate the transition clutch 34 in both a forward and a reverse direction either by the use of a second planetary gear set or by providing a drive connection between the sun gear 38 and the input to the transition clutch 34.

In the above-described embodiment, the forward clutch 64 and the reverse brake 46 are also used as starting devices. If desired, however, a fluid coupling or a clutch could be disposed between the input shaft and the flywheel and used as a starting device, with the clutch 64 and the brake 46 being used only to establish forward and reverse driving modes.

**0135363**

Claims:

1. A continuously variable power transmission for a vehicle, comprising input means (32) for receiving input drive, output means (92) for delivering a drive, variable-ratio belt and pulley means (56, 68, 70) having a first adjustable pulley (54) connected to the input means (32) and a second adjustable pulley (74), and selectively engageable clutch means (34; 96; 100), characterised in that multi-ratio gear means (84, 86; 88, 90) is drivingly connected to the output means (92), and that the selectively engageable clutch means comprises first clutch means (96) for selectively connecting the second adjustable pulley (74) to the output means (92) by way of one gear ratio (84, 86) of the multi-ratio gear means (84, 86; 88, 90), second clutch means (100) for selectively connecting the second adjustable pulley (74) to the output means (92) by way of another gear ratio (88,90) of the multi-ratio gear means (84, 86; 88, 90), and transition clutch means (34) for selectively connecting the input means (32) to the output means (92) during interchange of the first and second clutch means (96 and 100), with the variable-ratio belt and pulley means (56, 68, 70) being selectively controllable from an underdrive ratio to an overdrive ratio during an output speed increase when either of the first clutch means (96) or the second clutch means (100) is engaged, and being controllable from an overdrive ratio to an underdrive ratio during increasing output speeds when the transition clutch (34) is engaged.

2. A continuously variable power transmission according to claim 1, characterised in that the multi-ratio gear means (84, 86; 88, 90) has a low gear ratio (84, 86) and a high gear ratio (88, 90), the first clutch means comprises mechanical clutch means (96)

0135363

selectively engageable to connect the second adjustable pulley (74) to the output means (92) by way of the low gear ratio (84, 86) of the multi-ratio gear means (84, 86; 88, 90), the second clutch means comprises mechanical clutch means (100) for selectively connecting the second adjustable pulley (74) to the output means (92) by way of the high gear ratio (88,90) of the multi-ratio gear means (84, 86; 88, 90), chain drive means (114, 116, 118) is drivingly connectible to the output means (92) by way of the high gear ratio (88, 90), the transition clutch means (34) is selectively engageable for selectively connecting the input means (32) to the chain drive means (114, 116, 118) during the interchange of the first and second mechanical clutch means (96 and 100), and the variable-ratio belt and pulley means (56, 68, 70) is controllable from its overdrive ratio to its underdrive ratio during increasing output speeds when the transition clutch (34) is engaged and the first and second mechanical clutch means (96 and 100) are disengaged.

Fig. 1

0135363

Fig. 2

## DOCUMENTS CONSIDERED TO BE RELEVANT

EP 84305516.1

| Category | Citation of document with indication, where appropriate, of relevant passages | Relevant to claim | CLASSIFICATION OF THE APPLICATION (Int. Cl 4) |
|---|---|---|---|
| X | DE - C - 879 350 (PATENTVERWERTUNG REIMERS) <br> * Totality * <br> -- | 1,2 | F 16 H 37/02 |
| A | AT - B - 221 377 (UHER) <br> * Totality * <br> -- | | |
| A | DE - A1 - 3 305 924 (VALEO) <br> * Totality * <br> -- | | |
| A | FR - A - 1 268 226 (MÜLLER) <br> * Totality * <br> -- | | |
| A | EP - A1 - 0 004 412 (GKN) <br> * Totality * <br> -- | | |
| A | EP - A1 - 0 004 487 (RENAULT) <br> * Totality * <br> -- | | |
| A | EP - A1 - 0 071 801 (AISIN SEIKI K.K.) <br> * Totality * <br> ---- | | |

TECHNICAL FIELDS SEARCHED (Int. Cl.4)

F 16 H 5/00
F 16 H 37/00
F 16 H 47/00

The present search report has been drawn up for all claims

| Place of search | Date of completion of the search | Examiner |
|---|---|---|
| VIENNA | 06-11-1984 | SCHATEK |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03 82